(19) Europäisches Patentamt / European Patent Office / Office européen des brevets

(11) **EP 3 276 017 A1**

(12) **EUROPEAN PATENT APPLICATION**
published in accordance with Art. 153(4) EPC

(43) Date of publication:
**31.01.2018 Bulletin 2018/05**

(51) Int Cl.:
*C22C 14/00* [(2006.01)]    *F28F 21/08* [(2006.01)]
*H01M 8/0202* [(2016.01)]    *C22F 1/00* [(2006.01)]
*C22F 1/18* [(2006.01)]

(21) Application number: **16768838.1**

(22) Date of filing: **23.03.2016**

(86) International application number:
**PCT/JP2016/059256**

(87) International publication number:
**WO 2016/152935 (29.09.2016 Gazette 2016/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.03.2015 JP 2015060116**
**03.02.2016 JP 2016018554**

(71) Applicant: **Kabushiki Kaisha Kobe Seiko Sho (Kobe Steel, Ltd.)**
**Kobe-shi, Hyogo 651-8585 (JP)**

(72) Inventors:
• **ITO Yoshinori**
  **Kobe-shi**
  **Hyogo 651-2271 (JP)**
• **YAMASHITA Koji**
  **Kobe-shi**
  **Hyogo 651-2271 (JP)**
• **NOHARA Satoshi**
  **Kobe-shi**
  **Hyogo 651-2271 (JP)**

(74) Representative: **Müller-Boré & Partner**
**Patentanwälte PartG mbB**
**Friedenheimer Brücke 21**
**80639 München (DE)**

(54) **TITANIUM PLATE, PLATE FOR HEAT EXCHANGER, AND SEPARATOR FOR FUEL CELL**

(57) To provide a titanium plate that have both excellent strength and formability, and a plate for a heat exchanger and a separator for a fuel cell, which are made using the titanium plate. Disclosed is a titanium plate including Fe and O, with the balance being titanium and inevitable impurities, wherein the titanium plate includes an $\alpha$-phase crystal grain microstructure which takes a hexagonal close packed structure, and wherein, in case crystal orientations of the $\alpha$-phase crystal grains are represented by a crystallite orientation distribution function, when an orientation 1 is defined as $\phi1 = 0°$, $\Phi = 35°$, and $\phi2 = 0°$; an orientation 2 is defined as $\phi1 = 0°$, $\Phi = 35°$, and $\phi2 = 30°$; an orientation 3 is defined as $\phi1 = 90°$, $\Phi = 50°$, $\phi2 = 0°$; an orientation 4 is defined as $\phi1 = 90°$, $\Phi = 50°$, $\phi2 = 30°$; and an orientation 5 is defined as $\phi1 = 50°$, $\Phi = 90°$, and $\phi2 = 0°$, the $\alpha$-phase crystal grain microstructure of the titanium plate satisfies the formula: $0.05 \leq (X3 + X4 + X5) / (X1 + X2) \leq 3.0$ where each of X1, X2, X3, X4, and X5 is an area ratio of crystal grains having orientations within a range of 15° or less from the corresponding each of the orientations 1, 2, 3, 4, and 5, respectively, as a center thereof to a total area of all $\alpha$-phase crystal grains, and wherein an average value of the circle equivalent diameter of the $\alpha$-phase crystal grain is 3 $\mu$m or more and 25 $\mu$m or less, and a maximum value of the circle equivalent diameter of the $\alpha$-phase crystal grain is 140 $\mu$m or less.

*Fig.1*

**Description**

Technical Field

The present invention relates to a titanium plate and to a plate for a heat exchanger and a separator for a fuel cell, which are made using the titanium plate.

Background Art

Titanium plates have excellent specific strength and corrosion resistance and are thus generally used in parts for heat exchangers in chemical plants, power plants, food manufacturing plants, etc.; consumer goods, such as camera bodies and kitchen equipment; parts for transportation equipment, like motorcycles and automobiles; and exterior materials for household appliances etc. When used in a plate heat exchanger among these applications, which has recently been put into widespread use, the titanium plate is required for its high heat-exchange efficiency. Because of this, the titanium plate is processed into a wavy shape by press forming in order to increase its surface area. For its outline to be deeply waved, the titanium plate for a heat exchanger needs to have excellent formability. Furthermore, the titanium plate for a heat exchanger is required to have a certain strength or higher in order to improve durability and reduce weight, which are necessary for the heat exchanger.

Titanium plates which are commonly utilized in various applications, mentioned above, are specified in accordance with JIS H4600. Specifically, titanium plates are classified into JIS classes 1, 2, 3, and the like, depending on the concentration of impurities, such as Fe and O, the strength of each plate, and the like. With rising class number, the strength of a titanium plate becomes higher. Thus, the appropriate titanium plate is used for every application. Conventionally, a member that requires high formability is made using a pure titanium plate of JIS class 1 (with a proof stress of 165 MPa or more), in which Fe and O concentrations are low, because of its high ductility even though it is inferior in the strength. However, in addition to the improvement in the efficiency of the heat exchanger, demands for enhancing its strength and reducing its weight of the heat exchanger have been recently increased more and more. A titanium plate that meets these demands can be, for example, a pure titanium plate of JIS class 2 (with a proof stress of 215 MPa or more). Nevertheless, the pure titanium plate with such a strength level is inferior in terms of formability. Therefore, it is difficult to apply this kind of pure titanium plate to heat exchangers. In general, titanium material is designed to have its strength enhanced by increasing the concentrations of impurities, such as Fe and O, or by refining crystal grains. However, these methods can significantly deteriorate the formability of a titanium plate.

Regarding improvement of the formability of a titanium plate, various techniques have been conventionally proposed. For instance, Patent Document 1 discloses a manufacturing method for obtaining a pure titanium plate with less anisotropy in the proof stress through hot-rolling by setting a final rolling direction at a right angle relative to the rolling direction of slabbing. Patent Document 2 discloses a method for reducing in-plane anisotropy of a titanium plate by using a Ti-Fe-O-N based alloy material to roll the material only once in a direction perpendicular to an initial rolling direction. In a technique mentioned in Patent Document 3, the grain size of $\alpha$-phase crystal grains is increased, thereby enlarging the frequency of deformation twinning during press forming. Further, Patent Document 3 discloses the titanium plate that holds the adequate proof stress and press formability by performing skin-pass rolling at a rolling reduction of 0.7 to 5% after final annealing to adjust a texture (deviation angle of the C-axis), thereby attaining a specified cumulative strain. Patent Document 4 discloses a method for achieving a balance between the press formability and the strength of a titanium plate by applying a lubricant coating onto a surface of the titanium plate to thereby control a dynamic friction coefficient of the surface to be less than 0.15, and causing an elongation and an r value to satisfy a specific relationship formula. Patent Document 5 discloses a titanium plate that has improved formability by setting a Kearns factor f value, defined by a predetermined formula, at 0.60 or more.

Prior Art Document

Patent Document

Patent Document 1: JP 63-130753 A
Patent Document 2: JP 3481428 B1
Patent Document 3: JP 5385038 B1
Patent Document 4: JP 4452753 B1
Patent Document 5: JP 4088183 B1

Disclosure of the Invention

Problems to be Solved by the Invention

However, the manufacturing method mentioned in Patent Document 1 is a cross-rolling method that involves rolling a titanium plate in two respective directions that are vertical to each other. In general, this method cannot perform cross-rolling on a plate with a longer width than a rolling roll width, and thus has a significant limitation on the shape of the plate that can be subjected to rolling. Further, as the C-axis of a hexagonal crystal is oriented close to a normal to the plate surface, the titanium plate mentioned in Patent Document 1 exhibits low anisotropy in the strength thereof, but its local deformability is degraded. Hence, that titanium plate is not considered to be suitable for bending or bulging.

The method mentioned in Patent Document 2 is thought to be less restrictive than that in Patent Document 1. However, the method of Patent Document 2 also has a significant limitation on the shape of the plate that can be subjected to the rolling. Further, since the C-axis of a hexagonal crystal is oriented close to a normal to the plate surface, the titanium plate mentioned in Patent Document 2 also exhibits low anisotropy in the strength, and, again, its local deformability is degraded. Therefore, the titanium plate is not considered to be suitable for bending or bulging.

The method mentioned in Patent Document 3 involves skin-pass rolling, which increases the number of steps. Thus, this method is considered to be inferior in terms of productivity. The method mentioned in Patent Document 4 needs a coating step and a film-removing step, resulting in high costs. The method mentioned in Patent Document 5 cannot always attain sufficient strength and formability, and is still desired to further improve the strength and formability of the titanium plate.

The present invention has been made in view of the foregoing problems, and it is an object of the present invention to provide a titanium plate that has both excellent strength and formability, and a plate for a heat exchanger and a separator for a fuel cell, which are made using the titanium plate.

Means for Solving the Problems

The inventors have intensively studied about components and the like of a titanium alloy and consequently found that a titanium plate with high strength and excellent formability can be obtained by setting the Fe and O contents within predetermined ranges and precisely controlling the crystal orientation in the control of an $\alpha$-phase crystal grain microstructure, which is a main phase of the titanium plate. Based on the findings, the present invention has been completed. In particular, the inventors have succeeded in refining the $\alpha$-phase crystal grain microstructure to a specified extent by performing a heat treatment onto a two-phase coexistence region of the titanium plate, which consists of an $\alpha$-phase and a $\beta$-phase. The present invention has the following features.

A titanium plate according to the present invention includes: Fe: 0.020 to 1.000% by mass; and O: 0.020 to 0.400% by mass, with the balance being titanium and inevitable impurities, wherein the titanium plate includes an $\alpha$-phase crystal grain microstructure which takes a hexagonal close packed structure. In case crystal orientations of the $\alpha$-phase crystal grains are represented by a crystallite orientation distribution function, when an orientation 1 is defined as $\phi1 = 0°$, $\Phi = 35°$, and $\phi2 = 0°$; an orientation 2 is defined as $\phi1 = 0°$, $\Phi = 35°$, and $\phi2 = 30°$; an orientation 3 is defined as $\phi1 = 90°$, $\Phi = 50°$, $\phi2 = 0°$; an orientation 4 is defined as $\phi1 = 90°$, $\Phi = 50°$, $\phi2 = 30°$; and an orientation 5 is defined as $\phi1 = 50°$, $\Phi = 90°$, and $\phi2 = 0°$, the $\alpha$-phase crystal grain microstructure of the titanium plate satisfies the formula (1) below:

$$0.05 \leq (X3 + X4 + X5)/(X1 + X2) \leq 3.0 \qquad (1)$$

where each of X1, X2, X3, X4, and X5 is an area ratio of crystal grains having orientations within a range of 15° or less from the corresponding each of the orientations 1, 2, 3, 4, and 5, respectively, as a center thereof to a total area of all $\alpha$-phase crystal grains.

Furthermore, an average value of the circle equivalent diameter of the $\alpha$-phase crystal grain is 3 $\mu$m or more and 25 $\mu$m or less, and a maximum value of the circle equivalent diameter of the $\alpha$-phase crystal grain is 140 $\mu$m or less.

With such an arrangement, the titanium plate can have both the adequate strength and formability with less in-plane anisotropy in the strength.

In the titanium plate according to the present invention, the above-mentioned X5 preferably satisfies the formula (2) below.

$$0.5 \leq X5 \leq 20 \qquad (2)$$

With such an arrangement, the titanium plate can have both the adequate strength and formability with much less in-plane anisotropy in the strength.

Further, the titanium plate according to the present invention further preferably includes: one or more elements of N: 0.050% by mass or less; C: 0.100% by mass or less, and Al: 1.000% by mass or less.

With such an arrangement, the strength of the titanium plate can be further improved. Furthermore, the heat resistance of the titanium plate can also be improved by addition of Al.

The titanium plate according to the present invention preferably has a thickness of 1.0 mm or less.

The titanium plate with such an arrangement is suitable for performing a forming process, such as formation of flow channels in a plate for a heat exchanger and the like.

The plate for a heat exchanger according to the present invention is one which is made using the titanium plate, mentioned above, and has one or two or more flow channels with a pitch of 4t to 40t and a depth of 5t to 15t, where t is a thickness (mm) of the titanium plate.

With such an arrangement, the plate for a heat exchanger exhibits excellent heat-transfer efficiency and weight reduction effect.

Further, a separator for a fuel cell according to the present invention is one which is made using the titanium plate, mentioned above, and has one or two or more flow channels with a pitch of 4t to 40t and a depth of 5t to 15t, where t is a thickness (mm) of the titanium plate.

With such an arrangement, the separator for a fuel cell exhibits excellent heat-transfer efficiency and weight reduction effect.

Effects of the Invention

The titanium plate according to the present invention has excellent strength and formability. In particular, the titanium plate does not experience degradation in the surface roughness in the press forming and thus has excellent formability. Further, the use of such a titanium plate can produce the plate for a heat exchanger and the separator for a fuel cell that have excellent heat-transfer efficiency and weight reduction effect.

Brief Description of the Drawings

Fig. 1 is a conceptual diagram showing a crystal orientation of an $\alpha$-phase crystal grain of a titanium plate in the present invention.

Fig. 2 is a conceptual diagram showing a crystal orientation 1 of an $\alpha$-phase crystal grain of the titanium plate in the present invention.

Fig. 3 is a conceptual diagram showing a crystal orientation 2 of an $\alpha$-phase crystal grain of the titanium plate in the present invention.

Fig. 4(a) is a schematic plan view showing the shape of a forming die for evaluating the formability, and Fig. 4(b) is a schematic cross-sectional view taken along the line E-E of Fig. 4(a).

Fig. 5 is a schematic plan view showing a measurement part and a measurement direction for the surface roughness of a press-formed product.

Mode for Carrying Out the Invention

Embodiments of the present invention will be described in detail below.

[Titanium Plate]

The titanium plate according to the present invention includes: Fe: 0.020 to 1.000% by mass; and O: 0.020 to 0.400% by mass, with the balance being titanium and inevitable impurities, wherein the titanium plate includes $\alpha$-phase crystal grain microstructure which is an HCP structure (hexagonal close packed structure). The titanium plate according to the present invention has a chemical composition in conformity with the standard of industrial pure titanium, such as pure titanium of, for example, JIS H 4600 class 1 to class 4.

(Fe: 0.020 to 1.000% by mass; and O: 0.020 to 0.400% by mass)

A titanium plate has its strength reduced when the content of Fe and/or O is small. Furthermore, to manufacture a titanium plate having the content of Fe or O of less than 0.020% by mass, highly pure sponge titanium is used as a raw material, which leads to a high cost. Therefore, each of the Fe content and the O content is set at 0.020% by mass or more. Meanwhile, if the Fe content is high, segregation significantly occurs in an ingot, resulting in reduced productivity. Thus, the Fe content is set at 1.000% by mass or less, preferably 0.500% by mass or less, and more preferably 0.300% by mass or less. Meanwhile, if the O content is high, the titanium plate becomes brittle and is more likely to cause cracks during cold-rolling, resulting in reduced productivity and degraded formability. Thus, the O content is set at 0.400% by mass or less, and preferably 0.200% by mass or less.

Further, in the present invention, the heat treatment is performed onto a two-phase coexistence region of the titanium plate, which includes an $\alpha$-phase and a $\beta$-phase, as will be mentioned later. To ensure the wide two-phase coexistence region, the Fe content is preferably 0.04% or more, more preferably 0.05% by mass or more, and even more preferably 0.1% by mass or more. The O content is preferably 0.04% by mass, more preferably 0.05% by mass or more, and even more preferably 0.08% by mass or more. Industrial pure titanium material which has been conventionally used for applications that require high formability has a high purity and a narrow two-phase coexistence region of about 5°C.

(N: 0.050% by mass or less, C: 0.100% by mass or less, or Al: 1.000% by mass or less)

Regarding N, C, and Al, preferably, the titanium plate according to the present invention further includes one or more elements of N: 0.050% by mass or less; C: 0.100% by mass or less; and Al: 1.000% by mass or less, even though the content of the one or more elements exceeds a content that is allowable as an inevitable impurity as mentioned later.

Any of N, C, and Al can improve the strength of the titanium plate, and particularly Al can further improve the heat resistance of the titanium plate, when being added such that its content exceeds the content allowable as the inevitable impurity. To obtain these effects, each of the N content, the C content, and the Al content is preferably 0.001% by mass or more. Meanwhile, any excessive content of N, C, or Al in the titanium plate tends to cause cracks easily during cold-rolling, resulting in reduced productivity of the titanium plate. In particular, since C makes the titanium plate brittle, the C content is set at 0.100% by mass or less, and preferably 0.050% by mass or less. The N content is set at 0.050% by mass or less, and preferably 0.014% by mass or less. The Al content is set at 1.000% by mass or less, more preferably 0.400% by mass or less, and even more preferably 0.200% by mass or less.

(Balance: Titanium and Inevitable Impurities)

In the titanium plate according to the present invention, the balance includes titanium and inevitable impurities.
Examples of inevitable impurities include N, C, Al, H, Si, Cr, and Ni. N, C, and Al have been mentioned above. Other elements do not interrupt the effects of the present invention and can be allowed, as long as the H content is 0.005% by mass or less and the content of each of other elements is 0.1% by mass or less.

(Crystal Grain Microstructure)

The titanium plate in the present invention includes $\alpha$-phase crystal grain microstructure which is an HCP structure (hexagonal close packed structure). The crystal of the $\alpha$-phase crystal grain has a hexagonal crystal structure. The crystal structure itself has strong anisotropy. A conventional titanium plate manufactured by the rolling and annealing processes has a texture in which $\alpha$-phase crystal grains are recognized to be strongly accumulated in positions at an angle inclined by approximately 35° in the plate-width direction from the normal direction relative to the rolled surface. Further, the conventional titanium plate has no accumulation (peak) in positions at an angle inclined along the rolling direction and exhibits strong in-plane anisotropy in the strength at the rolled surface, which are problems.

The crystal orientation of a crystal grain in a material (sample) can be generally represented by using Euler angles based on the crystallite orientation distribution function. The Euler angles serve as the way to represent the crystal orientation relationship of a crystal grain with respect to a coordinate system of the sample. The crystallite orientation distribution function is mentioned, for example, in "Vector analysis method of texture", published in 1981 by the Iron and Steel Institute of Japan.

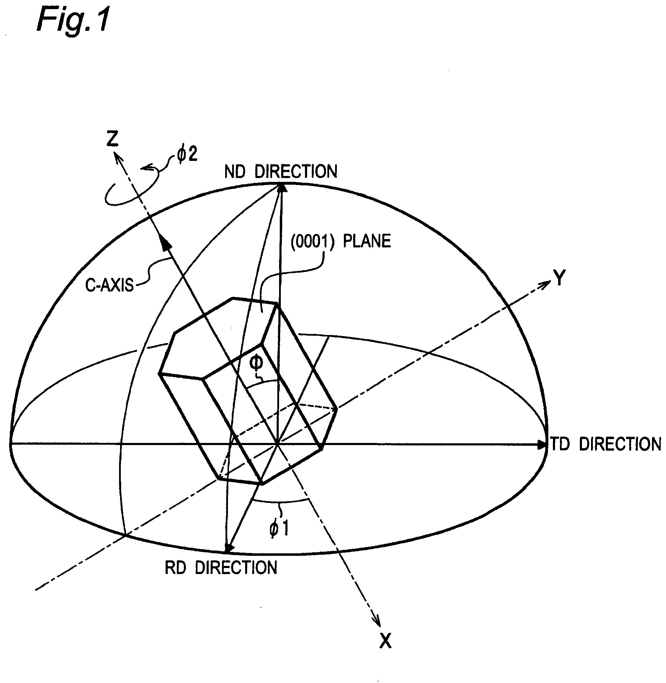

Fig. 1 is a conceptual diagram showing a crystal orientation of an $\alpha$-phase crystal grain of a titanium plate in the present invention. The sample coordinate system shown has three coordinate axes of an RD direction (rolling direction), a TD direction (plate-width or transverse direction), and an ND direction (normal direction relative to the rolled surface), which are perpendicular to one another. The crystal coordinate system shown has three coordinate axes of an X axis, a Y axis, and a Z axis, which are perpendicular to one another. Referring to Fig. 1, the X axis is identical to the [10-10] direction (the normal direction relative to the prismatic plane) ; the Y axis is identical to the [-12-10] direction; and the Z axis is identical to the [0001] direction (C-axis direction). In the Bunge representation method, first, suppose that the RD direction, the TD direction, and the ND direction in the sample coordinate system are identical to the X axis, the Y axis, and the Z axis in the crystal coordinate system, respectively. Then, the crystal coordinate system is rotated by ϕ1 about the Z axis, and then rotated by Φ about the X axis (in the state shown in Fig. 1) obtained after the rotation ϕ1. Finally, the crystal coordinate system is rotated by ϕ2 about the Z axis obtained after the rotation ϕ1 and the rotation Φ. By using these three angles ϕ1, Φ, and ϕ2, the crystal orientation (C-axis direction etc.,) of the α-phase crystal grain is specified.

That is, ϕ1 is an angle formed by the RD direction (rolling direction) in the sample coordinate system and an intersection line between the RD-TD plane (rolled plane) in the sample coordinate system and the [10-10]-[-12-10] plane in the crystal coordinate system. Φ is an angle formed by the ND direction (normal direction relative to the rolled surface) in the sample coordinate system and the [0001] direction (normal direction relative to the (0001) plane) in the crystal coordinate system. ϕ2 is an angle formed by the [10-10] direction in the crystal coordinate system and an intersection line between the RD-TD plane (rolled plane) in the sample coordinate system and the [10-10]-[-12-10] plane in the crystal coordinate system.

Here, by using the Bunge representation method, the orientation 1 is defined as ϕ1 = 0°, Φ = 35°, and ϕ2 = 0°; an orientation 2 is defined as ϕ1 = 0°, Φ = 35°, and ϕ2 = 30°; an orientation 3 is defined as ϕ1 = 90°, Φ = 50°, ϕ2 = 0°; an orientation 4 is defined as ϕ1 = 90°, Φ = 50°, ϕ2 = 30°; and an orientation 5 is defined as ϕ1 = 50°, Φ = 90°, and ϕ2 = 0°.

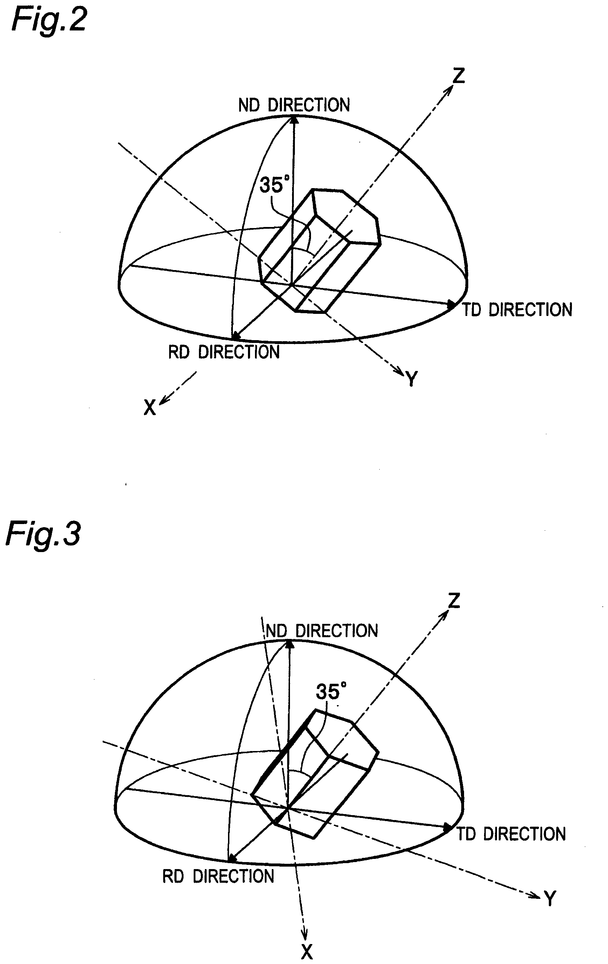

Fig. 2 is a conceptual diagram showing the crystal orientation 1 of an α-phase crystal grain. Fig. 3 is a conceptual diagram showing the crystal orientation 2 of an α-phase crystal grain. Each of the orientation 1 and the orientation 2 corresponds to a texture component mainly recognized in the conventional material, and indicates an orientation in which the C-axis is inclined from the normal direction relative to the rolled surface toward the plate-width direction (TD direction). Meanwhile, each of the orientation 3 and the orientation 4 is close to an orientation in which the C-axis is rotated by 90° from the rolling direction in the rolled surface, and indicates the orientation in which the C-axis is inclined from the normal direction relative to the rolled surface toward the rolling direction (RD direction). The orientation 5 is an orientation parallel to a direction at which the C-axis is perpendicular to the normal to the rolled surface and rotated by 40° from the rolling direction toward the plate-width direction. Note that Figs. 2 and 3 are the conceptual diagrams showing the difference between the orientations 1 and 2 of the α-phase crystal grain for understanding the crystal orientation, mentioned above. Thus, Figs. 2 and 3 do not necessarily show an inclination, an angle, etc., precisely in strict sense.

The present invention has been made based on the following findings. The accumulation of similar α-phase crystal grains are formed in each of the orientation 3 and the orientation 4 at which the C-axis is rotated by 90° in the rolled surface, as well as further in the orientation 5 at which the C-axis is rotated by about 40° in the rolled surface, in addition to the accumulation of the α-phase crystal grains that are recognized in the conventional material, thereby making it possible to reduce the in-plane anisotropy in the strength of the titanium plate.

The α-phase crystal grain microstructure of the titanium plate satisfies formula (1) below, thereby making it possible to improve the strength and the formability thereof:

$$0.05 \leq (X3 + X4 + X5)/(X1 + X2) \leq 3.0 \qquad (1)$$

where each of X1, X2, X3, X4, and X5 is an area ratio of crystal grains having orientations within a range of 15° or less from the corresponding each of the orientations 1, 2, 3, 4, and 5, respectively, as the center thereof to a total area of all α-phase crystal grains. The expression "crystal grains having orientations within a range of 15° or less from the corresponding orientation as the center" as used herein means all crystal grains located in a region ranging from the corresponding orientation as the center to 15° or less.

(X1 + X2) indicates a total of the area ratios of the crystal grains having the orientations of the main texture recognized in the conventional material. Meanwhile, (X3 + X4 + X5) indicates a total of the area ratios of the crystals grains that have the crystal orientations specified by the orientations 3, 4, and 5, with respect to the area ratio of the crystal grains having the texture recognized in the conventional material. (X3 + X4 + X5) contributes to improving the formability of the titanium plate in the rolling direction. If (X3 + X4 + X5) / (X1 + X2) as the ratio between these totals is less than 0.05, the reduction in the anisotropy in the strength is not enough. Meanwhile, in practice, (X3 + X4 + X5) / (X1 + X2) does not exceed 3.0. Thus, (X3 + X4 + X5) / (X1 + X2) is set at 0.05 or more and 3.0 or less. (X3 + X4 + X5) / (X1 + X2) is preferably 0.05 or more and 0.5 or less, and more preferably 0.08 or more and 0.5 or less.

Further, X5 satisfies the formula (2) below:

$$0.5 \leq X5 \leq 20 \qquad (2)$$

where X5 is the area ratio of crystal grains having the orientations within a range of 15° or less from the orientation 5 as the center thereof to the total area of all α-phase crystal grains.

If X5 is 0.5 or more, the in-plane anisotropy in the strength of the titanium plate is further reduced, thereby improving its formability more. Meanwhile, if X5 is less than 0.5, this effect is not sufficient. Thus, the lower limit of X5 is set at 0.5 or more, and more preferably 1.0 or more. Meanwhile, in practice, X5 does not exceed 20. Thus, the upper limit of X5 is set at 20 or less, and preferably 8 or less.

The Euler angles represented by the crystallite orientation distribution function can be determined by orientation analysis using SEM (scanning electron microscope)/EBSD (electron backscatter diffraction) measurement method (to be mentioned later). Here, by using the Bunge representation method, the orientation of $\phi 1 = 0°$, $\Phi = 0°$, and $\phi 2 = 0°$ is defined as the state in which the C-axis of the $\alpha$-phase crystal grain is parallel to the plate-thickness direction of a rolled plate (normal direction relative to the rolled plate), and the [10-10] direction (normal direction relative to the prismatic plane) of the $\alpha$-phase crystal grain is parallel to the rolling direction of the rolled plate.

The term "rolling direction" as used herein indicates the longitudinal direction of a material in the case of a coil. However, assuming that the material is cut into a plate shape, for convenience, the rolling direction is defined as the direction in which a 0.2% proof stress exhibits the minimum value when performing a tensile test in a direction parallel to the plate surface.

The texture of the crystal grains that satisfies the above-mentioned formulas (1) and (2) can be achieved by controlling an intermediate annealing condition, a final cold-rolling condition, and a final annealing condition during manufacturing the titanium plate having the above-mentioned composition as will be mentioned later.

Note that whether the formula (1) or (2) is satisfied or not is normally determined based on the measurement result of a thickness center of the titanium plate as will be mentioned later. However, in principle, these formulas (1) and (2) are satisfied regardless of the position of the plate in the thickness direction.

(Circle Equivalent Diameter of $\alpha$-Phase Crystal Grain: Average Value of 3 $\mu$m or more and 25 $\mu$m or less, and Maximum Value of 140 $\mu$m or less)

In the titanium plate according to the present invention, if the particle size of an $\alpha$-phase crystal grain is extremely large, the plate surface obtained after the forming process will become rough, even if the formability in a desired texture state is improved. Further, as the plate thickness becomes thinner, the number of crystal grains occupying in the plate-thickness direction decreases, thereby degrading the formability of the titanium plate.

Therefore, an average value of the circle equivalent diameter of the $\alpha$-phase crystal grain (indicating the diameter of a circle having the same area as a cross section of the crystal grain) is set at 25 $\mu$m or less, and the maximum value of the circle equivalent diameter of the $\alpha$-phase crystal grain is 140 $\mu$m or less. The average value of the circle equivalent diameter of the $\alpha$-phase crystal grain is preferably 20 $\mu$m or less. The maximum value of the circle equivalent diameter of the $\alpha$-phase crystal grain is preferably 120 $\mu$m or less, and more preferably 100 $\mu$m or less. The maximum value of the circle equivalent diameter of the $\alpha$-phase crystal grain also depends on the plate thickness and is preferably approximately a quarter or less of the plate thickness. If the average value of the circle equivalent diameter of the $\alpha$-phase crystal grain is less than 3 $\mu$m, the titanium plate tends to degrade its ductility and formability. Thus, the average value of the circle equivalent diameter is 3 $\mu$m or more, and preferably 5 $\mu$m or more.

The above-mentioned $\alpha$-phase crystal grain size can be achieved by controlling the final annealing condition and the rolling reduction at the final cold-rolling step directly before the final annealing during manufacturing as will be mentioned later. The above-mentioned $\alpha$-phase crystal grain size is one at any cross section of the titanium plate. Because of the plate-shape, a surface of the titanium plate that is parallel to the rolled surface is observed, so that the $\alpha$-phase crystal grain size can be measured. Specifically, the surface (plate surface) of the titanium plate is polished as an observation surface. An electron backscatter diffraction (EBSD) method is conducted to measure and analyze an EBSD pattern while scanning the surface with a beam of electrons by using a scanning electron microscope (SEM) . A boundary with a misorientation angle of 10° or more is recognized as the crystal grain boundary. A crystal grain is defined as a region enclosed by the crystal grain boundary.

(Plate Thickness: 1.0 mm or less)

The titanium plate according to the present invention that is suitable for forming flow channels in a plate for a heat exchanger and the like preferably has a thickness of 1.0 mm or less. If the thickness of the titanium plate exceeds 1.0 mm, the titanium plate tends to cause a wrinkle when providing elongated flow channels by a forming process, thereby making it less likely to obtain a desired fine flow channel. Further, a deformation resistance during the forming process becomes high, leading to an increased cost. The thickness of the titanium plate is more preferably 0.7 mm or less in terms of the formability and cost. Meanwhile, the thickness of the titanium plate is preferably 0.05 mm or more to obtain a practical strength as a plate for a heat exchanger and a separator for a fuel cell. The thickness of the titanium plate is more preferably 0.07 mm or more from the viewpoint of further improving its strength.

[Plate for Heat Exchanger and Separator for Fuel Cell]

The use of the titanium plate according to the present invention can produce the plate for a heat exchanger and the separator for a fuel cell that have excellent heat-transfer efficiency and weight reduction effect.

Specifically, the titanium plate can be formed in a more complicated shape than a conventional one by providing one or two or more flow channels with a pitch of 4t to 40t and a depth of 5t to 15t, where t is a thickness (mm) of the titanium plate. That is, in the titanium plate, a deep flow channel (s) can be formed, narrow flow channels can be formed to decrease a pitch, or any pattern can be formed. Consequently, the surface area of the formed titanium plate can be increased to equalize the flow of a heat medium (liquid, gas), thereby making it possible to produce the plate for a heat exchanger and the separator for a fuel cell that exhibit excellent heat-transfer efficiency. Further, the titanium plate is strengthened and thereby can be thinned with the same level of heat-transfer efficiency, thus making it possible to produce the lightweight plate for a heat exchanger and the lightweight separator for a fuel cell.

[Manufacturing Method of Titanium Plate]

The titanium plate according to the present invention can be manufactured by the known methods, like the conventional titanium plate. Specifically, an ingot is subjected to slabbing and hot-rolling into a desired thickness, followed by annealing, cold-rolling, and final annealing on predetermined conditions to be mentioned below.

(Titanium Material Manufacturing Step)

First, in a titanium material manufacturing step, an ingot is manufactured by a method conventionally known, and then subjected to forging or slabbing. For example, first, raw materials made of predetermined compositions are melted by a consumable electrode type vacuum arc melting method (VAR method), a plasma arc melting method (PAM method), or an electron beam melting method (EB method), followed by casting, thereby producing a titanium ingot. The ingot is subjected to forging (hot-forging) or slabbing into a block shape with a predetermined size. The chemical components, such as Fe, have been mentioned above, and the predetermined compositions are prepared in the melting process.

(Hot-Rolling Step)

Then, in a subsequent hot-rolling step, the block-shaped slab is subjected to hot-rolling by being heated, for example, at a temperature between 700°C and 1050°C, thereby producing a hot-rolled plate.

(Annealing Step)

Then, in an annealing step, the hot-rolled plate obtained in this manner is held at a temperature between 650°C and 850°C. Thereafter, the annealed plate is subjected to cold-rolling.

(Cold-Rolling Step, Intermediate Annealing Step)

When the annealing step is finished after the hot-rolling, the hot-rolled plate obtained is normally subjected to repetition of a cold-rolling step and an intermediate annealing step into a desired thickness. When the material is relatively soft, or when the desired thickness is relatively large and the rolling reduction from the annealing after the hot-rolling is small, there is no need for the intermediate annealing. In contrast, when the material is hard, or when the rolling reduction from the annealing after the hot-rolling becomes large, the intermediate annealing is required midway because cracking occurs during the cold-rolling. The necessity or the required number of the intermediate annealing depends on the material or the rolling reduction in the cold-rolling. The number of intermediate annealing is normally preferably one to four times, and more preferably two to four times.

The titanium plate according to the present invention can have the specified $\alpha$-phase crystal grain microstructure, mentioned above, by performing the intermediate annealing step, the final cold-rolling step, and the final annealing step on the specific conditions. Now, a description will be given on the features of the manufacturing method for the titanium plate according to the present invention.

(Intermediate Annealing Step)

Here, a case in which the intermediate annealing is performed once will be described by way of example. Note that in a case in which no intermediate annealing step is necessary, annealing after the hot-rolling corresponds to the intermediate annealing. The main purpose of the intermediate annealing step is to soften the material in order to improve the cold rollability, the cold-rolling being performed afterwards. For this reason, the intermediate annealing step is usually performed within a recrystallization temperature range (normally in a range from 500°C to 880°C) for a short period of time in the case of a high temperature (for several minutes at approximately 800°C) or for a long period of time in the case of a low temperature (for 20 hours or more at approximately 600°C). In the present invention, to obtain the desired α-phase crystal microstructure at the final annealing, it should be supposed that the intermediate annealing step is performed for several minutes. Because of this, the intermediate annealing temperature is managed to be lower than 800°C. The intermediate annealing temperature is preferably 650°C or higher and 760°C or lower.

When the intermediate annealing is performed under the high-temperature condition that exceeds 800°C, the desired α-phase crystal grain microstructure is not formed occasionally even by performing the predetermined final annealing in the present invention. This is considered to be because the intermediate annealing changes the α-phase texture form, adversely affecting the formation of the texture of the α-phase crystal grains in the cold-rolling and the final annealing afterwards. If the intermediate annealing temperature is low, a longer process time is required, resulting in reduced productivity.

When the intermediate annealing is performed twice or more times, in the intermediate annealing performed finally (final intermediate annealing), the intermediate annealing temperature is managed to be lower than 800°C as mentioned above. The intermediate annealing temperature is preferably 650°C or higher and 760°C or lower.

The intermediate annealing step may be performed in any atmosphere, such as the atmosphere, vacuum, inert gas, or reducing gas. The intermediate annealing step can be performed by either a batch furnace or a continuous furnace. In particular, when annealing is performed in the atmosphere (atmosphere annealing), scale build-up occurs on the surface of the titanium plate (hot-rolled plate). Before a subsequent step (a following cold-rolling step if this annealing is the intermediate annealing), a scale removal step is preferably performed, for example, by a salt heat treatment, pickling treatment, or the like.

(Cold-Rolling Step, Final Cold-Rolling Step)

A total rolling reduction (processing rate with respect to the hot-rolled plate) in the cold-rolling (cold-rolling step, final cold-rolling step) performed on the titanium plate according to the present invention is set in a range of 20 to 98%. Note that the above-mentioned intermediate annealing may be performed a plurality of times midway through the cold-annealing.

A rolling reduction in the cold-rolling after the final intermediate annealing, that is, in the final cold-rolling step is set in a range of 20 to 87%. In this way, the texture of the desired α-phase crystal grains is formed. At this time, when the rolling reduction exceeds 87%, the desired α-phase crystal grain microstructure cannot be obtained even by the final annealing to be mentioned later. The rolling reduction in the final cold-rolling step is preferably set in a range of 20 to 70%. If the rolling reduction is extremely low, the grain size of α grains obtained after the final annealing might become coarse. Thus, the rolling reduction is preferably in a range of 35 to 70% and more preferably in a range of 50 to 70%.

Preferably, the rolling reduction in the cold rolling performed for a duration from the hot-rolling step to immediately before the final cold-rolling step does not exceed the rolling reduction in the final cold-rolling step.

(Final Annealing Step)

In the titanium plate according to the present invention, the α-phase grain size and the anisotropy in the strength thereof are preferably controlled by adjusting the temperature and time in the final annealing step. For this reason, the final annealing step is performed at an annealing temperature, which is equal to or higher than a temperature at which a β-phase content becomes 20%, and lower than a β transformation point (Tβ). The β transformation point is the minimum temperature at which all α-phase grains in the titanium plate (cold-rolled plate) disappear and are transformed into β-phase grains. The β transformation point changes depending on a chemical composition (Fe content and the like) of titanium material. The temperature of the β transformation point of pure titanium is 882°C.

In the annealing step and the intermediate annealing step in the related art, as mentioned above, general annealing of the pure titanium material is performed in a temperature range from 600°C or higher at which recrystallization proceeds, to a temperature at which a β-phase fraction is several percentages (%) or less. In contrast, the final annealing according to the present invention is performed at an annealing temperature in a range from a temperature which is equal to or higher than a temperature at which a β-phase content becomes 20%, to a temperature lower than the β transformation point (Tβ).

In phase transformation when a β-phase existing at a high temperature is transformed into an α-phase by cooling the titanium plate to room temperature, a texture that is preferable in terms of improving the formability is formed. For this reason, when taking into account only the formation of the texture, the annealing should be performed at a temperature exceeding the β transformation point to thereby form 100% of the β-phase at a time. However, the annealing at the temperature exceeding the βtransformation point causes β-phase crystal grains to grow rapidly, thus coarsening the crystal grains. Consequently, allowable ranges of the manufacturing conditions in the final annealing step are limited, which is an issue in terms of managing the manufacture.

For this reason, in the temperature range where the α-phase and the β-phase coexist, the annealing is performed to suppress the growth of the β-phase (crystal grains) by the presence of the α-phase (crystal grains) remaining in the annealing temperature range. Then, when being cooled, the β-phase is transformed into the α-phase, thereby forming the desired texture, which makes it possible to reduce the anisotropy in the strength of the titanium plate. The temperature at which the β-phase content is 20%, as well as the β transformation point can be calculated by thermodynamic calculation software "Thermo Calc" or the like.

Nevertheless, as the holding time at the above-mentioned annealing temperature becomes longer, the α-phase crystal grains become coarse, and an oxidized layer that would degrade the formability is thickly formed on the plate surface. The surface oxidized layer only needs to be removed by pickling or the like. However, the thick oxidized layer causes the deterioration in the yield, which is not preferable. Therefore, the holding time in the final annealing step is set at 0 or more and 5 hours or less, preferably 1 hour or less, more preferably 10 minutes or less, and even more preferably 3 minutes or less. To develop the desired texture by restraining, as much as possible, the formation of the α-phase grains having the same orientation as that of the α-phase grains remaining in the annealing temperature range when transforming the β-phase to the α-phase, the cooling rate needs to be set at 60°C/sec or higher. The cooling rate is preferably 100°C/sec or higher. Since the cooling cannot be done by an existing equipment at a cooling rate exceeding 1,500°C/sec, the upper limit of the cooling rate is 1,500°C/sec. The cooling rate can be calculated by measuring a temperature history during the cooling process and performing straight-line approximation over temperatures ranging from 800°C to 700°C.

Note that the lower limit of holding time is 0 hour, which means that cooling is started as soon as the predetermined temperature range is reached by heating the cold-rolled plate. The final annealing step may be performed in any atmosphere, such as the atmosphere, vacuum, inert gas, or reducing gas. When the atmosphere annealing is performed, the scale removal step, mentioned above, is preferably performed after the cooling.

As mentioned above, in the manufacturing method for the titanium plate according to the present invention, particularly, the following characteristic manufacturing conditions are taken to satisfy the formulas (1) and (2) and the α-phase grain size by controlling the crystal grain microstructure of the titanium plate. That is, (i) the annealing temperature in the final annealing step is in a range from a temperature which is equal to or higher than the temperature at which the β-phase content becomes 20%, to a temperature lower than the β transformation point (Tβ) ; (ii) the intermediate annealing temperature is lower than 800°C; (iii) the rolling reduction in the final cold-rolling step is set in a range of 20 to 87%; and (iv) the cooling rate in the final annealing step is set at 60°C/sec or higher. The use of these conditions can suppress the occurrence of coarse α-phase crystal grains and β-phase crystal grains, can reduce the size of the α-phase crystal grains, and thereby can exhibit excellent formability and appearance without degrading the surface roughness of the titanium plate by the press forming or the like.

Examples

The embodiments for implementing the present invention have been described above. Hereinafter, Examples in which the effects of the present invention were confirmed will be specifically described by comparison with Comparative Examples that did not satisfy the requirements of the present invention. The present invention is not limited to the following examples. Various modifications can be made to these examples within the scope of the claims and are all included within the scope of the present invention.

[Fabrication of Test Materials]

A pure titanium (JIS H4600) ingot and Fe and the like, added to the pure titanium ingot, were melted by the VAR method and then casted, thereby producing a titanium ingot having the composition shown in Table 1. Note that the notation "-" represented in an element of the composition shown in Table 1 means that the content of the element is 0.005% by mass or less. Each titanium ingot was subjected to forging (hot-forging), hot-rolling, and annealing on the known conditions, thereby producing a hot-rolled plate having a thickness of 4.0 mm. Scales built up on the surface of the hot-rolled plate were removed, and then subjected to the intermediate annealing, the final cold-rolling, and the final annealing under the conditions shown in Table 1, followed by a salt bath treatment and a descaling process by pickling. As a result, a test material having a thickness of 0.45 mm was produced (test materials No. 1 to No. 18). The cooling rate after the heating in the final annealing step was calculated by performing the straight-line approximation on the temperature history over temperatures ranging from 800°C to 700°C. Based on the composition of each test material, the temperature at which the β-phase content was 20% and the β-transformation point (Tβ) were calculated by using the thermodynamic calculation software "Thermo Calc (database: TTTi3)", and the calculation results were also shown in Table 1. To easily judge whether the final annealing process was performed at a temperature lower than the β-transformation point Tβ, Table 1 shows a numerical value (T - Tβ), obtained by subtracting Tβ from the holding temperature T in the final annealing.

(Measurement of α-Phase Texture and Grain Size)

The surface (plate surface) of the test material was polished. Then, regarding a rolled surface of a 1/2 thickness part (thickness center part) of the plate, its microstructure in a 1.6 mm square region (each 1.6 mm in the rolling direction and the rolling-width direction) was observed with the EBSD. The EBSD measurement was performed using a FE-SEM and an EBSD detector. Measurement data obtained was analyzed by using the EBSD data analysis software to measure the texture and the grain size. Note that the minimum grain size of the crystal grain to be measured by the EBSD was set at 1.5 μm.

The texture of each test material was analyzed by the crystallite orientation distribution function (ODF) using analysis software of SEM-EBSD, thereby determining respective area ratios (X1, X2, X3, X4, and X5). Here, the area ratios (X1, X2, X3, X4, and X5) were the respective area ratios of crystal grains having orientations within 15° or less from the specific crystal orientations of the crystal grains (orientation 1, orientation 2, orientation 3, orientation 4, and orientation 5), to a total area of all crystal grains. Each orientation was represented by three Euler angles with respect to the material coordinate system. From these numerical values, (X3 + X4 + X5) / (X1 + X2) was calculated. The results are shown in Fig. 2.

Here, the Euler angles were represented by using the Bunge representation method. The orientation of $\phi1 = 0°$, $\Phi = 0°$, and $\phi2 = 0°$ is defined as the state in which the C-axis of the α-phase crystal grain is parallel to the plate-thickness direction of the rolled plate (normal direction relative to the rolled plate), and the [10-10] direction (normal direction relative to the prismatic plane) of the α-phase crystal grain is parallel to the rolling direction of the rolled plate. Meanwhile, regarding the grain size, the circle equivalent diameter of each crystal grain was calculated based on the measurement results of the SEM-EBSD in the same manner by setting a boundary with a misorientation angle of 10° or more as the crystal grain boundary. The average value of the circle equivalent diameter and the maximum value of the circle equivalent diameter of each test material are shown in Table 2. Note that in Table 2, numerical values that are underlined indicate ones that deviated from the requirement of the present invention.

Regarding the calculation of the average value of the circle equivalent diameter of the α-phase crystal grain, a boundary with a misorientation angle of 10° or more was recognized as the crystal grain boundary based on data points identified as α phase, with reference to the measurement results of EBSD. An area surrounded by this crystal grain boundary was regarded as a crystal grain, and then the circle equivalent diameter of each crystal grain was calculated by image analysis. At this time, the measurement results contain noise (or measurement points not identified accurately). To eliminate the influence of the noise, crystal grains were extracted in the order of decreasing the grain size from the largest one. When an area of the extracted crystal grains first exceeded 95% of the total area of all the α-phase crystal grains identified, the extracted crystal grains were set as a calculation parameter of an average grain size.

Regarding the calculation of the maximum value of the circle equivalent diameter of the α-phase crystal grain, an average of the first to fifth largest crystal grains was used as the maximum value based on the data mentioned above.

[Performance Evaluation]

(Tensile Test)

A test specimen No. 13 specified by JIS Z2201 was cut out of each test material. A tensile test was performed at the room temperature by setting the rolling direction (RD) as a load-axis direction based on JIS H4600 to thereby measure a 0.2% proof stress (YS). The results are shown in Fig. 2. The test materials having a 0.2% proof stress of 170 MPa or more were rated as "Pass".

(Evaluation on Formability)

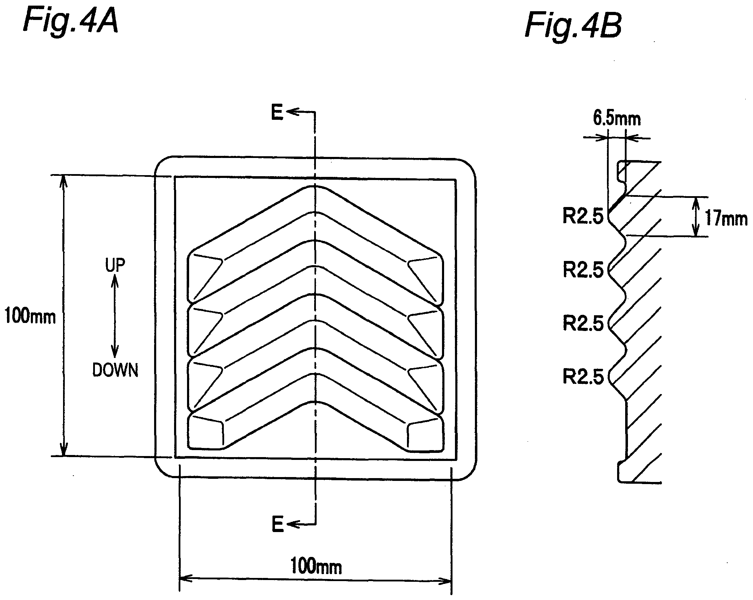

The formability was evaluated by press forming of each test material using a forming die that imitated a heat exchanging part (plate) of a plate heat exchanger. Fig. 4(a) is a schematic plan view showing the shape of the forming die for evaluating the formability. Fig. 4(b) is a schematic cross-sectional view taken along the line E-E of Fig. 4(a). As shown in Figs. 4(a) and 4(b), the forming die is shaped to have a forming part with a size of 100 mm × 100 mm. The forming part has four ridge line parts with a pitch of 17 mm and a maximum depth of 6.5 mm. Each ridge line part has an R shape with R = 2.5 mm at its vertex.

The press forming was performed using this forming die by an 80 ton pressing machine. In the press forming, anti-rust oil for lubrication was applied onto both sides of each test material, and the test material was then placed on the lower die such that the rolling direction of the test material was aligned with the up-down direction shown in the Fig. 4(a). Subsequently, after a flange portion was restrained by a plate presser, the upper die was pushed toward the lower die on a condition of a pressing rate of 1 mm/sec. The die was pressed by a distance of 0.1 mm, and the maximum press depth (E: in units of mm) that did not cause cracking was determined by experiments. A formability index (F) was calculated by the formula below. The results are shown in Table 2. The formability index (F) of a positive value means that there was good balance between the strength and the formability of the test material. The test materials having such a positive value were rated as "Pass".

$$F = E - (G - H \times YS)$$

$$G = 7.00, H = 0.0120$$

YS = a numerical value obtained by making a 0.2% proof stress in the RD direction (rolling direction) dimensionless
E = a numerical value obtained by making the maximum press depth dimensionless

(Measurement of Surface Roughness)

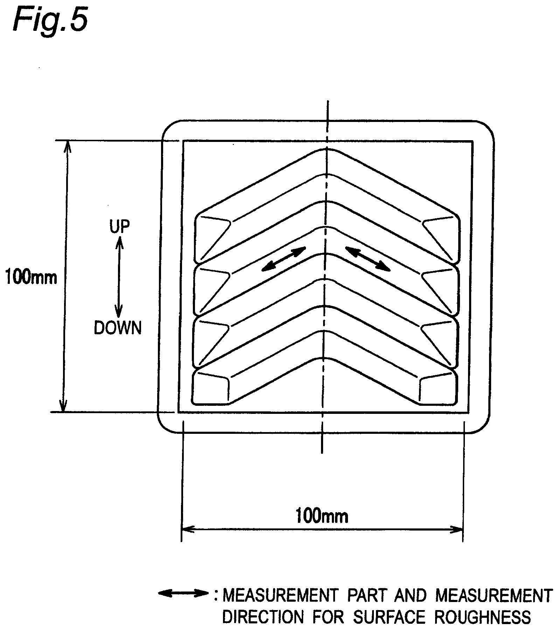

The surface roughness was measured using a surface roughness- shape measuring instrument (trade name: SURFCOM 130A, manufactured by TOKYO SEIMITSU Co., Ltd.) by a method in conformity with JIS B 0601:2001. At this time, the measurement distance was set at 4 mm, and the measurement rate was 0.6 mm/sec. The press forming was applied on the test material up to the maximum press depth, which did not cause cracking. The arithmetic mean roughness (Ra) was measured at five sites of the pressed test material along each ridge line part. Then, the surface roughness was defined as an average value of these measured roughnesses. The test materials having the surface roughness of 1.5 or less were rated as "Pass". Fig. 5 is a schematic plan view showing a measurement part and a measurement direction for the surface roughness of a press-formed product.

[Table 1]

| Test material No. | Composition (% by mass), Balance: Ti + inevitable impurities | | | | | Temperature at which β-phase content was 20%, T1 (°C) | Tβ (°C) | Intermediate annealing | Final cold-rolling | Final annealing | | | | Note |
|---|---|---|---|---|---|---|---|---|---|---|---|---|---|---|
| | Fe | O | N | C | Al | | | Holding temperature (°C) | Rolling reduction | Holding temperature, T (°C) | T-Tβ (°C) | Holding time (s) | Cooling rate (°C/s) | |
| 1 | 0.050 | 0.099 | - | - | - | 881 | 892 | 750 | 65 | 887 | -5 | 60 | 100 | Example |
| 2 | 0.050 | 0.099 | - | - | - | 881 | 892 | 750 | 85 | 884 | -8 | 120 | 100 | Example |
| 3 | 0.067 | 0.110 | - | - | - | 880 | 893 | 750 | 67 | 887 | -6 | 30 | 100 | Example |
| 4 | 0.067 | 0.110 | - | - | - | 880 | 893 | 750 | 67 | 887 | -6 | 60 | 100 | Example |
| 5 | 0.062 | 0.080 | - | 0.030 | - | 881 | 901 | 750 | 65 | 895 | -6 | 60 | 100 | Example |
| 6 | 0.062 | 0.080 | - | - | - | 879 | 889 | 770 | 70 | 887 | -2 | 30 | 100 | Example |
| 7 | 0.050 | 0.099 | - | - | - | 881 | 892 | 750 | 65 | 889 | -3 | 60 | 1,000 | Example |
| 8 | 0.085 . | 0.120 | - | - | - | 879 | 893 | 750 | 67 | 887 | -6 | 60 | 60 | Example |
| 9 | 0.070 | 0.100 | - | - | - | 879 | 891 | 750 | 55 | 885 | -6 | 30 | 1,000 | Example |
| 10 | 0.080 | 0.090 | 0.010 | - | - | 879 | 899 | 750 | 67 | 888 | -11 | 30 | 100 | Example |
| 11 | 0.072 | 0.080 | - | - | 0.010 | 878 | 890 | 750 | 67 | 885 | -5 | 30 | 1,000 | Example |
| 12 | 0.240 | 0.050 | - | - | - | 859 | 883 | 750 | 64 | 879 | -4 | 30 | 100 | Example |
| 13 | 0.050 | 0.099 | - | - | - | 881 | 892 | 750 | 85 | 800 | -92 | 60 | 100 | Comparative Example |
| 14 | 0.050 | 0.099 | - | - | - | 881 | 892 | 750 | 85 | 910 | 18 | 30 | 100 | Comparative Example |
| 15 | 0.050 | 0.099 | - | - | - | 881 | 892 | 810 | 85 | 884 | -8 | 60 | 60 | Comparative Example |
| 16 | 0.067 | 0.110 | - | - | - | 880 | 893 | 750 | 67 | 800 | -93 | 60 | 100 | Comparative |
| 17 | 0.067 | 0.110 | - | - | - | 880 | 893 | 750 | 67 | 910 | 17 | 35 | 60 | Comparative Example |
| 18 | 0.067 | 0.110 | - | - | - | 880 | 893 | 810 | 85 | 887 | -6 | 60 | 60 | Comparative Example |

EP 3 276 017 A1

[Table 2]

| Test material No. | α-phase crystal grain | | α-phase texture | | Tensile properties | Surface roughness after forming (Ra) | Formability index (F) | Note |
| --- | --- | --- | --- | --- | --- | --- | --- | --- |
| | Average circle equivalent diameter (μm) | Maximum circle equivalent diameter (μm) | (X3+X4+X5) / (X1+X2) | X5 | 0.2% proof stress (MPa) | | | |
| 1 | 17 | 90 | 0.10 | 3.0 | 235 | 1.2 | 0.10 | Example |
| 2 | 19 | 84 | 0.06 | 2.0 | 230 | 1.1 | 0.05 | Example |
| 3 | 14 | 62 | 0.12 | 3.0 | 240 | 1.0 | 0.09 | Example |
| 4 | 18 | 79 | 0.15 | 4.0 | 245 | 1.0 | 0.15 | Example |
| 5 | 15 | 63 | 0.10 | 2.5 | 243 | 1.1 | 0.07 | Example |
| 6 | 19 | 85 | 0.11 | 3.0 | 253 | 1.1 | 0.20 | Example |
| 7 | 15 | 72 | 0.17 | 1.5 | 245 | 1.0 | 0.25 | Example |
| 8 | 21 | 90 | 0.06 | 2.5 | 250 | 1.2 | 0.06 | Example |
| 9 | 15 | 65 | 0.20 | 1.2 | 235 | 1.0 | 0.23 | Example |
| 10 | 18 | 75 | 0.12 | 2.5 | 245 | 1.1 | 0.15 | Example |
| 11 | 19 | 80 | 0.10 | 2.0 | 240 | 1.1 | 0.13 | Example |
| 12 | 7 | 26 | 0.14 | 1.0 | 260 | 1.1 | 0.10 | Example |
| 13 | 18 | 80 | 0.01 | 0.2 | 250 | 1.05 | -0.30 | Comparative Example |
| 14 | 26 | 316 | 0.60 | 12.0 | 289 | 2.0 | 0.70 | Comparative Example |
| 15 | 16 | 65 | 0.04 | 0.3 | 230 | 1.1 | -0.02 | Comparative Example |
| 16 | 12 | 45 | 0.03 | 0.1 | 290 | 0.85 | -0.01 | Comparative Example |
| 17 | 27 | 167 | 0.75 | 10.0 | 302 | 2.1 | 0.40 | Comparative Example |
| 18 | 17 | 90 | 0.04 | 0.4 | 240 | 1.0 | -0.02 | Comparative Example |

EP 3 276 017 A1

As shown in Table 2, in each of the test materials Nos. 1 to 12 as Examples of the present invention, the circle equivalent diameter of the $\alpha$-phase crystal grain and the texture state (numerical values of the formulas (1) and (2)) fell within the scope of the present invention, and the excellent strength and formability were held with good balance between them without deteriorating the surface roughness of the plate surface after the forming process.

In contrast, in each of the test materials Nos. 13 and 16, the final annealing temperature was lower than the specified range, whereby the development of the texture was not sufficient, and the formability was degraded. In each of the test materials Nos. 14 and 17, the final annealing temperature was higher than the specified range, whereby the $\alpha$-phase crystal grains became extremely coarse, even though the excellent strength and formability were exhibited, resulting in a larger surface roughness after the forming process. In each of the test materials No. 15 and No. 18, the intermediate annealing temperature was so high that the development of the texture was not sufficient, and the formability was degraded.

**Claims**

1. A titanium plate comprising: Fe: 0.020 to 1.000% by mass; and O: 0.020 to 0.400% by mass, with the balance being titanium and inevitable impurities, wherein the titanium plate includes an $\alpha$-phase crystal grain microstructure which takes a hexagonal close packed structure, and
   wherein, in case crystal orientations of the $\alpha$-phase crystal grains are represented by a crystallite orientation distribution function, when an orientation 1 is defined as $\phi1 = 0°$, $\Phi = 35°$, and $\phi2 = 0°$; an orientation 2 is defined as $\phi1 = 0°$, $\Phi = 35°$, and $\phi2 = 30°$; an orientation 3 is defined as $\phi1 = 90°$, $\Phi = 50°$, $\phi2 = 0°$; an orientation 4 is defined as $\phi1 = 90°$, $\Phi = 50°$, $\phi2 = 30°$; and an orientation 5 is defined as $\phi1 = 50°$, $\Phi = 90°$, and $\phi2 = 0°$, the $\alpha$-phase crystal grain microstructure of the titanium plate satisfies the formula (1) below:

$$0.05 \leq (X3 + X4 + X5)/(X1 + X2) \leq 3.0 \qquad (1)$$

   where each of X1, X2, X3, X4, and X5 is an area ratio of crystal grains having orientations within a range of 15° or less from the corresponding each of the orientations 1, 2, 3, 4, and 5, respectively, as a center thereof to a total area of all $\alpha$-phase crystal grains, and
   wherein an average value of the circle equivalent diameter of the $\alpha$-phase crystal grain is 3 $\mu$m or more and 25 $\mu$m or less, and a maximum value of the circle equivalent diameter of the $\alpha$-phase crystal grain is 140 $\mu$m or less.

2. The titanium plate according to claim 1, wherein the above-mentioned X5 satisfies the formula (2) below.

$$0.5 \leq X5 \leq 20 \qquad (2)$$

3. The titanium plate according to claim 1 or 2, further comprising one or more elements of N: 0.050% by mass or less; C: 0.100% by mass or less, and Al: 1.000% by mass or less.

4. The titanium plate according to claim 1 or 2, which has a thickness of 1.0 mm or less.

5. A plate for a heat exchanger, which is made using the titanium plate according to claim 1 or 2, and has one or two or more flow channels with a pitch of 4t to 40t and a depth of 5t to 15t, where t is a thickness (mm) of the titanium plate.

6. A separator for a fuel cell, which is made using the titanium plate according to claim 1 or 2, and has one or two or more flow channels with a pitch of 4t to 40t and a depth of 5t to 15t, where t is a thickness (mm) of the titanium plate.

*Fig.1*

**Fig.2**

**Fig.3**

Fig.4B

17mm

6.5mm

R2.5

R2.5

R2.5

R2.5

Fig.4A

E

E

100mm

100mm

UP

DOWN

# Fig.5

← → : MEASUREMENT PART AND MEASUREMENT DIRECTION FOR SURFACE ROUGHNESS

## INTERNATIONAL SEARCH REPORT

| International application No. |
| --- |
| PCT/JP2016/059256 |

A. CLASSIFICATION OF SUBJECT MATTER
*C22C14/00*(2006.01)i, *F28F21/08*(2006.01)i, *H01M8/0202*(2016.01)i, *C22F1/00*
(2006.01)n, *C22F1/18*(2006.01)n

According to International Patent Classification (IPC) or to both national classification and IPC

B. FIELDS SEARCHED

Minimum documentation searched (classification system followed by classification symbols)
C22C14/00, F28F21/08, H01M8/0202, C22F1/00, C22F1/18

Documentation searched other than minimum documentation to the extent that such documents are included in the fields searched
Jitsuyo Shinan Koho        1922–1996   Jitsuyo Shinan Toroku Koho   1996–2016
Kokai Jitsuyo Shinan Koho  1971–2016   Toroku Jitsuyo Shinan Koho   1994–2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2010-150607 A  (Kobe Steel, Ltd.), 08 July 2010 (08.07.2010), (Family: none) | 1-6 |
| A | JP 2014-12881 A  (Kobe Steel, Ltd.), 23 January 2014 (23.01.2014), & KR 10-2013-0137553 A  & CN 103484805 A | 1-5 |
| A | JP 2014-205904 A  (Kobe Steel, Ltd.), 30 October 2014 (30.10.2014), & US 2015/0376738 A1    & WO 2014/148211 A1 & KR 10-2015-0119301 A  & CN 105308199 A | 1-5 |
| P,A | JP 2015-63720 A  (Kobe Steel, Ltd.), 09 April 2015 (09.04.2015), & WO 2015/046084 A1 | 1-6 |

| ☒  Further documents are listed in the continuation of Box C. | ☐  See patent family annex. |
| --- | --- |

| *     Special categories of cited documents: | "T"   later document published after the international filing date or priority date and not in conflict with the application but cited to understand the principle or theory underlying the invention |
| --- | --- |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search 14 June 2016 (14.06.16) | Date of mailing of the international search report 21 June 2016 (21.06.16) |
| --- | --- |
| Name and mailing address of the ISA/ Japan Patent Office 3-4-3,Kasumigaseki,Chiyoda-ku, Tokyo 100-8915,Japan | Authorized officer

Telephone No. |

Form PCT/ISA/210 (second sheet) (January 2015)

**INTERNATIONAL SEARCH REPORT**

| International application No. |
| --- |
| PCT/JP2016/059256 |

C (Continuation). DOCUMENTS CONSIDERED TO BE RELEVANT

| Category* | Citation of document, with indication, where appropriate, of the relevant passages | Relevant to claim No. |
| --- | --- | --- |
| E,A | JP 2016-102237 A (Kobe Steel, Ltd.), 02 June 2016 (02.06.2016), (Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63130753 A
- JP 3481428 B
- JP 5385038 B
- JP 4452753 B
- JP 4088183 B

**Non-patent literature cited in the description**

- Vector analysis method of texture. Iron and Steel Institute, 1981